# EUROPEAN PATENT APPLICATION

(11) **EP 4 611 341 A1**
(43) Date of publication of application: **03.09.2025**
(21) Application number: 23884225.6
(22) Date of filing: 28.06.2023
(51) Int. Cl.: H04L 45/247

(54) **METHOD AND APPARATUS FOR PROCESSING SLICE CONFIGURATION INFORMATION**

(30) Priority: 04.11.2022 CN 202211378526
(71) Applicant: Huawei Technologies Co., Ltd., Shenzhen, Guangdong 518129 (CN)
(72) Inventor: YAO, Junda, Shenzhen, Guangdong 518129 (CN); HU, Zhibo, Shenzhen, Guangdong 518129 (CN); DONG, Jie, Shenzhen, Guangdong 518129 (CN)
(74) Representative: Pfenning, Meinig & Partner mbB
(86) International application number: PCT/CN2023/103125
(87) International publication number: WO 2024/093286

(57) **Abstract**

Embodiments of this application provide a slice configuration information processing method. A controller may determine slice configuration information of each link in at least one link included in a first packet forwarding path, and send a route control message including the slice configuration information of each link to a network node in the first packet forwarding path. Compared with delivering the slice configuration information via a network configuration, delivering the slice configuration information via the route control message has higher delivery efficiency. Therefore, efficiency of receiving the slice configuration information by the network node is improved, and correspondingly, efficiency of forwarding a service by the network node based on the slice configuration information is improved. Especially in a protection path switching scenario, according to this solution, a network node can switch a service to a backup path for forwarding as soon as possible, thereby reducing service interruption.

## Description

This application claims priority to Chinese Patent Application No. 202211378526.4, filed with the China National Intellectual Property Administration on November 4, 2022 and entitled "SLICE CONFIGURATION INFORMATION PROCESSING METHOD AND APPARATUS", which is incorporated herein by reference in its entirety.

### TECHNICAL FIELD

This application relates to the communication field, and in particular, to a slice configuration information processing method and apparatus.

### BACKGROUND

A network slice may be a virtual network obtained by dividing a physical network, and the network slice may be a virtual network that includes a specific network function and that includes a customized network topology and a network resource. Network slices can meet service function requirements of different network slice tenants. The network slice is used to transmit a service of a corresponding network slice tenant, so that quality of service provided for the network slice tenant can be ensured. In embodiments of this application, the "network slice" may also be referred to as a "slice network", and the "network slice" and the "slice network" may be used alternately in embodiments of this application.

In the slice network, a controller may obtain a transmission path through computation and set a slice configuration for the transmission path, so that a network node can forward a service in the slice network based on the slice configuration set by the controller. Currently, when the network node forwards a slice service in the slice network, the service may be interrupted.

Therefore, a solution is urgently needed to resolve the foregoing technical problem.

### SUMMARY

Embodiments of this application provide a slice configuration information processing method and apparatus, to reduce service interruption existing when a service is forwarded in a slice network.

According to a first aspect, an embodiment of this application provides a slice configuration information processing method. The method may be applied to a controller. In an example, the controller may determine slice configuration information of each link in at least one link included in a first packet forwarding path, and send a route control message including the slice configuration information of each link to a network node in the first packet forwarding path. It can be learned that, according to this solution, the controller may send the slice configuration information to the network node in the first packet forwarding path via the route control message. Compared with delivering the slice configuration information via a network configuration (netconf), delivering the slice configuration information via the route control message has higher delivery efficiency. Therefore, efficiency of receiving the slice configuration information by the network node is improved, and correspondingly, efficiency of forwarding a service by the network node based on the slice configuration information is improved. Especially in a protection path switching scenario, according to this solution, a network node can switch a service to a backup path for forwarding as soon as possible, thereby reducing service interruption. In addition, in this embodiment of this application, the slice configuration information of each link may be carried in one route control message, and the route control message is delivered to the network node. Compared with delivering the slice configuration information via the netconf in a point-to-point manner, a quantity of messages is reduced.

In a possible implementation, slice configuration information of a first link may include a slice identifier corresponding to the first link, a link identifier of the first link, and a slice interface identifier corresponding to the first link. The slice identifier corresponding to the first link may also be understood as a slice identifier corresponding to the first packet forwarding path, and all links in the first packet forwarding path correspond to a same slice identifier. The link identifier of the first link identifies the first link, and the slice interface identifier corresponding to the first link may be an identifier of an interface used by a first network node to forward a packet including the slice identifier.

In a possible implementation, the link identifier of the first link may be an identifier of the first network node. The identifier of the first network node mentioned herein may be an identifier of a physical interface that is included in the first network node and that is associated with the slice identifier. The identifier of the physical interface may be an internet protocol (Internet Protocol, IP) address of the physical interface, or may be a router identifier of the physical interface.

In a possible implementation, all the links in the first packet forwarding path correspond to the same slice identifier. Therefore, in an example, when the slice configuration information of each link is carried via the route control message, the slice identifier may be carried in a slice identifier field. In other words, slice identifiers of all the links share one slice identifier field. In this manner, a message length of the route control message can be reduced, and repeated carrying of same content in the route control message can also be avoided.

In a possible implementation, the slice configuration information of each link may further include a quality of service (quality of service, QoS) requirement. QoS requirements of all the links are the same. In this embodiment of this application, the QoS requirement includes but is not limited to a latency requirement, a bandwidth requirement, and the like.

In a possible implementation, all the links in the first packet forwarding path correspond to the same QoS requirement. Therefore, in an example, when the slice configuration information of each link is carried via the route control message, the QoS requirement may be carried in a slice attribute field. In other words, QoS requirements of all the links share one slice attribute field. In this manner, a message length of the route control message can be reduced, and repeated carrying of same content in the route control message can also be avoided.

In a possible implementation, when the QoS requirement includes the bandwidth requirement, the bandwidth requirement may be carried in a bandwidth type-length-value (type-length-value, TLV) field in the route control message. In an example, the bandwidth TLV may include a type field, a length field, and a value field. In still another example, in addition to the type field, the length field, and the value field, the bandwidth TLV may further include another field. This is not specifically limited in embodiments of this application.

In a possible implementation, considering that efficiency of delivering the slice configuration information to the network node by the controller according to a border gateway protocol (Border Gateway Protocol, BGP) is far higher than efficiency of delivering the slice configuration information to the network node via the netconf, the route control message may be a BGP message.

In a possible implementation, when the route control message is the BGP message, the BGP message may be extended, for example, a new extended community attribute is extended, and the slice configuration information of each link is carried in the extended community attribute that is extended. In this way, the slice configuration information of each link is carried via the BGP message.

In a possible implementation, considering that efficiency of delivering the slice configuration information to the network node by the controller according to a path computation element communication protocol (Path Computation Element Communication Protocol, PCEP) is far higher than efficiency of delivering the slice configuration information to the network node via the netconf, the route control message may be a PCEP message.

In a possible implementation, considering that efficiency of delivering the slice configuration information to the network node by the controller according to an OpenFlow protocol is far higher than efficiency of delivering the slice configuration information to the network node via the netconf, the route control message may be an OpenFlow message.

According to a second aspect, an embodiment of this application provides a slice configuration information processing method, and the method may be applied to a first network node. The first network node may receive a route control message sent by a controller, where the route control message includes slice configuration information of each link in at least one link in a first packet forwarding path, the at least one link includes a first link, and the first link is a link from the first network node to a second network node. After receiving the route control message, the first network node may obtain slice configuration information of the first link based on the route control message, and store the slice configuration information of the first link. It can be learned that, according to this solution, the controller may send the slice configuration information to the first network node via the route control message. Compared with delivering the slice configuration information via a netconf, delivering the slice configuration information via the route control message has higher delivery efficiency. Therefore, efficiency of receiving the slice configuration information of the first link by the first network node is improved, and correspondingly, efficiency of forwarding a service by the first network node based on the slice configuration information of the first link is improved. Especially in a protection path switching scenario, according to this solution, a first network node can switch a service to a backup path for forwarding as soon as possible, thereby reducing service interruption.

In a possible implementation, the slice configuration information of the first link includes a slice identifier corresponding to the first link, a link identifier of the first link, and a slice interface identifier corresponding to the first link.

In a possible implementation, after receiving the route control message, the first network node may extract the first slice configuration information from the route control message by using an identifier of the first link as an index.

In a possible implementation, all links correspond to a same slice identifier, the route control message includes a slice identifier field, and the slice identifier field is used to carry the slice identifier.

In a possible implementation, the slice configuration information further includes a quality of service QoS requirement.

In a possible implementation, all the links correspond to a same QoS requirement, the route control message includes a slice attribute field, and the slice attribute field is used to carry the QoS requirement.

In a possible implementation, the QoS requirement includes a bandwidth requirement, and the bandwidth requirement is carried in a bandwidth requirement type-length-value TLV field in the route control message.

In a possible implementation, the link identifier of the first link includes an identifier of the first network node.

In a possible implementation, the route control message is a border gateway protocol BGP message.

In a possible implementation, the BGP message includes an extended community attribute, and the extended community attribute is used to carry the slice configuration information of each link.

In a possible implementation, the route control message is a path computation element communication protocol PCEP message or an OpenFlow message.

According to a third aspect, an embodiment of this application provides a slice configuration information processing apparatus, used in a controller. The apparatus includes: a processing unit, configured to determine slice configuration information of each link in at least one link included in a first packet forwarding path; and a sending unit, configured to send a route control message including the slice configuration information of each link to a network node in the first packet forwarding path.

In a possible implementation, the at least one link includes a first link, and slice configuration information of the first link includes: a slice identifier corresponding to the first link, a link identifier of the first link, and a slice interface identifier corresponding to the first link. The first link is a link from a first network node to a second network node.

In a possible implementation, all links correspond to a same slice identifier, the route control message includes a slice identifier field, and the slice identifier field is used to carry the slice identifier.

In a possible implementation, the slice configuration information further includes a quality of service QoS requirement.

In a possible implementation, all the links correspond to a same QoS requirement, the route control message includes a slice attribute field, and the slice attribute field is used to carry the QoS requirement.

In a possible implementation, the QoS requirement includes a bandwidth requirement, and the bandwidth requirement is carried in a bandwidth requirement type-length-value TLV field in the route control message.

In a possible implementation, the link identifier of the first link includes an identifier of the first network node.

In a possible implementation, the route control message is a border gateway protocol BGP message.

In a possible implementation, the BGP message includes an extended community attribute, and the extended community attribute is used to carry the slice configuration information of each link.

In a possible implementation, the route control message is a path computation element communication protocol PCEP message or an OpenFlow message.

According to a fourth aspect, an embodiment of this application provides a slice configuration information processing apparatus, used in a first network node. The apparatus includes: a receiving unit, configured to receive a route control message sent by a controller, where the route control message includes slice configuration information of each link in at least one link in a first packet forwarding path, the at least one link includes a first link, and the first link is a link from the first network node to a second network node; and a processing unit, configured to: obtain slice configuration information of the first link based on the route control message, and store the slice configuration information of the first link.

In a possible implementation, the slice configuration information of the first link includes a slice identifier corresponding to the first link, a link identifier of the first link, and a slice interface identifier corresponding to the first link.

In a possible implementation, obtaining slice configuration information of the first link based on the route control message includes: extracting the first slice configuration information from the route control message by using an identifier of the first link as an index.

In a possible implementation, all links correspond to a same slice identifier, the route control message includes a slice identifier field, and the slice identifier field is used to carry the slice identifier.

In a possible implementation, the slice configuration information further includes a quality of service QoS requirement.

In a possible implementation, all the links correspond to a same QoS requirement, the route control message includes a slice attribute field, and the slice attribute field is used to carry the QoS requirement.

In a possible implementation, the QoS requirement includes a bandwidth requirement, and the bandwidth requirement is carried in a bandwidth requirement type-length-value TLV field in the route control message.

In a possible implementation, the link identifier of the first link includes an identifier of the first network node.

In a possible implementation, the route control message is a border gateway protocol BGP message.

In a possible implementation, the BGP message includes an extended community attribute, and the extended community attribute is used to carry the slice configuration information of each link.

In a possible implementation, the route control message is a path computation element communication protocol PCEP message or an OpenFlow message.

According to a fifth aspect, an embodiment of this application provides a device. The device includes a processor and a memory. The memory is configured to store instructions or a computer program. The processor is configured to execute the instructions or the computer program in the memory, to perform the method according to any one of the first aspect or the method according to any one of the second aspect.

According to a sixth aspect, an embodiment of this application provides a computer-readable storage medium, including instructions or a computer program. When the instructions or the computer program is run on a computer, the computer is enabled to perform the method according to any one of the first aspect or the method according to any one of the second aspect.

According to a seventh aspect, an embodiment of this application provides a computer program product including instructions or a computer program. When the computer program product runs on a computer, the computer is enabled to perform the method according to any one of the first aspect or the method according to any one of the second aspect.

### BRIEF DESCRIPTION OF DRAWINGS

To describe technical solutions in embodiments of this application or the conventional technology more clearly, the following briefly describes accompanying drawings for describing embodiments or the conventional technology. It is clear that the accompanying drawings in the following descriptions show only some embodiments recorded in this application, and a person of ordinary skill in the art may still derive other accompanying drawings from these accompanying drawings without creative efforts.
FIG. 1 is a diagram of an application scenario according to an embodiment of this application;
FIG. 2 is a diagram of an example of an application scenario according to an embodiment of this application;
FIG. 3 is a signaling exchange diagram of a slice information processing method according to an embodiment of this application;
FIG. 4a is a diagram of a structure of a route control message according to an embodiment of this application;
FIG. 4b is a diagram of a structure of a bandwidth TLV according to an embodiment of this application;
FIG. 5 is a diagram of a structure of a slice configuration information processing apparatus according to an embodiment of this application;
FIG. 6 is a diagram of a structure of still another slice configuration information processing apparatus according to an embodiment of this application; and
FIG. 7 is a diagram of a structure of a device according to an embodiment of this application.

### DESCRIPTION OF EMBODIMENTS

Embodiments of this application provide a slice configuration information processing method and apparatus, to reduce service interruption existing when a service is forwarded in a slice network.

For ease of understanding, content related to the slice network is first described.

In the slice network, when forwarding a data packet, a network node first determines, based on a destination address of the packet, a next hop and an outbound interface for packet forwarding. After determining the outbound interface, the network node may further determine a packet forwarding resource based on a correspondence between the outbound interface and a slice ID. The packet forwarding resource mentioned herein may be a physical sub-interface corresponding to the outbound interface, a channelized sub-interface corresponding to the outbound interface, or a flexible Ethernet (Flexible Ethernet, FlexE) interface.

The FlexE interface may be understood as an interface to which a FlexE technology is applied. In the FlexE technology, a FlexE shim is used to pool physical interface resources by slot. A large-bandwidth physical interface is flexibly divided into several FlexE interfaces based on a slot resource pool, to implement flexible and refined management of interface resources. Bandwidth resources are strictly isolated between the FlexE interfaces.

The channelized sub-interface uses a sub-interface model. Bandwidth is flexibly allocated by configuring an independent channelized sub-interface for the network slice. Each network slice is allocated exclusive bandwidth and a scheduling tree to reserve a resource for a slice service.

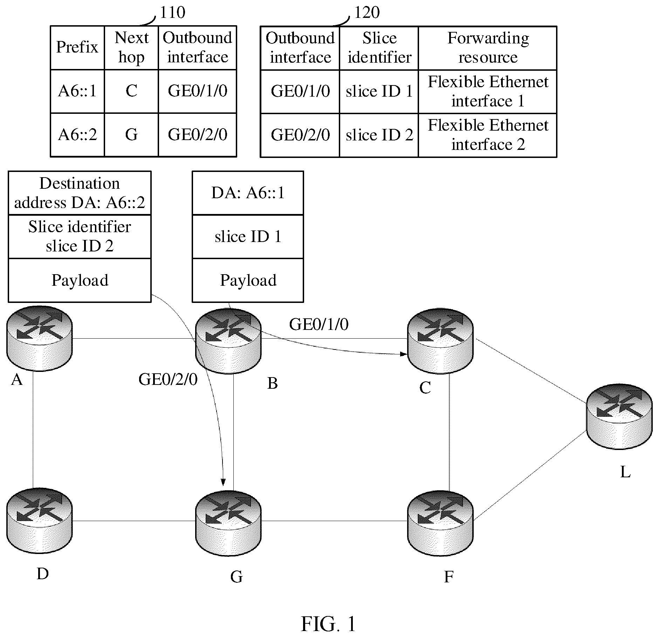

A specific manner in which a network node forwards a packet in a slice network is described with reference to FIG. 1. FIG. 1 is a diagram of an application scenario according to an embodiment of this application. As shown in FIG. 1, a network node B includes interfaces GE0/1/0 and GE0/2/0. A forwarding table stored in the network node B includes a correspondence 110 and a correspondence 120.

The correspondence 110 includes two correspondences: a correspondence between a prefix A6::1, a next hop C, and the outbound interface GE0/1/0, and a correspondence between a prefix A6::2, a next hop G, and the outbound interface GE0/2/0.

The correspondence 120 also includes two correspondences: a correspondence between the outbound interface GE0/1/0, a slice ID 1, and a FlexE interface 1, and a correspondence between the outbound interface GE0/2/0, a slice ID 2, and a FlexE interface 2.

If a destination address of a packet 1 received by the network node B is A6::1 and the packet carries the slice ID 1, the network node B may first match the destination address A6::1 with the correspondence 110, to determine that a next hop is a network node C, and determine that an outbound interface is GE0/1/0. Further, the network node B may match the outbound interface GE0/1/0 with the correspondence 120, to determine that a forwarding resource is the FlexE interface 1. Further, the network node B may forward the packet 1 to the network node C through the FlexE interface 1.

Similarly, if a destination address of a packet 2 received by the network node B is A6::2 and the packet carries the slice ID 2, the network node B may first match the destination address A6:: 2 with the correspondence 110, to determine that a next hop is a network node G, and determine that an outbound interface is GE0/2/0. Further, the network node B may match the outbound interface GE0/2/0 with the correspondence 120, to determine that a forwarding resource is the FlexE interface 2. Further, the network node B may forward the packet 1 to the network node G through the FlexE interface 2.

In an example, when a network node forwards a packet in a slice network, a controller may obtain a packet forwarding path in the slice network through computation, and the controller delivers the packet forwarding path to a head node of the packet forwarding path. The controller may further deliver, to a network node in the packet forwarding path, slice configuration information indicating each network node in the packet forwarding path to forward a packet. After receiving the slice configuration information delivered by the controller, the network node may forward a packet based on the slice configuration information.

Currently, after obtaining the packet forwarding path in the slice network through computation, the controller may send the packet forwarding path and path configuration information to the head node of the packet forwarding path according to a protocol such as a BGP or a PCEP. Efficiency of delivering information to the network node through the BGP or the PCEP is high. In other words, efficiency of sending, by the controller, the packet forwarding path and the path configuration information to the head node of the packet forwarding path is high.

In addition, a network management module of the controller delivers slice configuration information corresponding to each node in the packet forwarding path to the node in the packet forwarding path via a netconf. The slice configuration information mentioned herein may include, for example, a slice resource that needs to be reserved by each node. The efficiency of delivering the information to the network node via the netconf is low. In other words, efficiency of delivering the slice configuration information to the network node by the controller via the netconf is low.

In an example, the controller may include a control unit, a flexible sub-channel (Flexible channel) unit, and a slice database (database, DB). The slice configuration information may be determined through the control unit, the flexible channel unit, and the slice DB. Details are not described herein.

Efficiency of delivering information according to the BGP or the PCEP is greatly different from efficiency of delivering information via the netconf. As a result, the path configuration information on a network node side is inconsistent with the slice configuration information within a specific time period, and the network node cannot forward a packet over the packet forwarding path within the time period, resulting in service interruption. Especially in a protection path switching scenario, path configuration information of a protection path is inconsistent with corresponding slice configuration information within a specific time period, and a network node cannot forward a packet over the protection path within the time period, in other words, the network node cannot quickly switch a service to the protection path for forwarding, resulting in service interruption.

To resolve this problem, an embodiment of this application provides a slice configuration information processing method. The following describes the method with reference to the accompanying drawings.

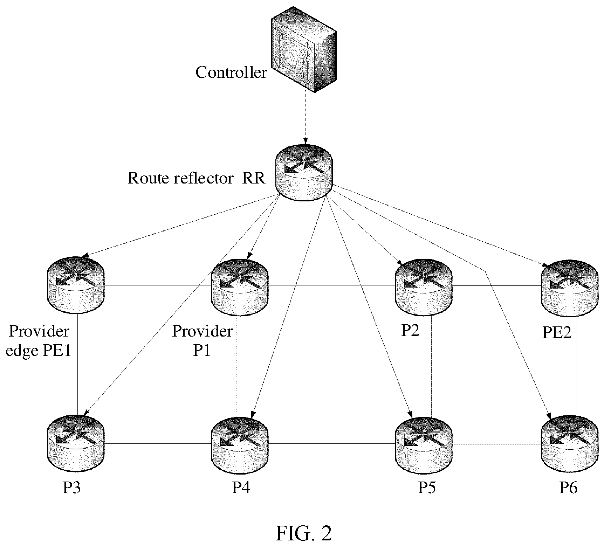

FIG. 2 is a diagram of an example of an application scenario according to an embodiment of this application. As shown in FIG. 2, a controller may interact with network nodes such as a provider edge (provider edge, PE)1, a PE2, a provider (provider, P) 1, a P2, a P3, a P4, a P5, and a P6 through a route reflector (route reflector, RR). In another example, the controller may directly interact with the network nodes. Connection relationships between the network nodes are not described in detail herein one by one.

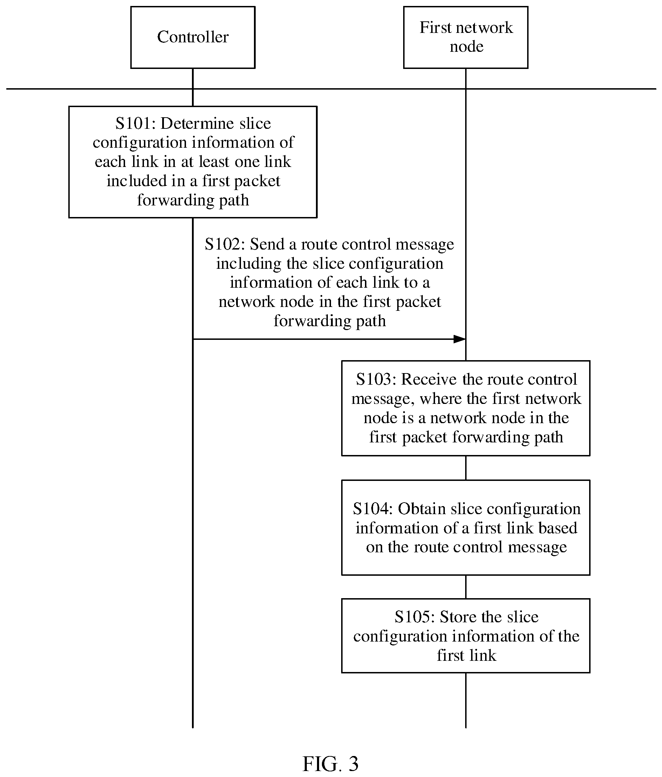

Next, with reference to FIG. 3 and the application scenario shown in FIG. 2, the slice configuration information processing method provided in embodiments of this application is described. FIG. 3 is a signaling exchange diagram of a slice information processing method according to an embodiment of this application. The method shown in FIG. 3 may include, for example, the following S101 to S105.

S101: A controller determines slice configuration information of each link in at least one link included in a first packet forwarding path.

In an example, the first packet forwarding path may be a packet forwarding path obtained by the controller through computation. For example, the controller may obtain the first packet forwarding path through computation based on a service requirement. The first packet forwarding path is not specifically limited in this embodiment of this application. For example, the first packet forwarding path may correspond to a segment routing internet protocol version 6 (Segment Routing Internet Protocol Version 6, SRv6) policy (policy), or the first forwarding path may correspond to a multi-protocol label switching (Multi-Protocol Label Switching, MPLS) path. Details are not listed one by one herein. An implementation in which the controller obtains the first packet forwarding path through computation is not described in detail herein.

After determining the first packet forwarding path, the controller may further determine the slice configuration information of each link in the at least one link included in the first packet forwarding path. For the configuration information of each link, a first link in the at least one link is used as an example for description, where the first link is a link from a first network node to a second network node.

In an example, slice configuration information of the first link may include a slice identifier corresponding to the first link, a link identifier of the first link, and a slice interface identifier corresponding to the first link.

The slice identifier corresponding to the first link may also be understood as a slice identifier corresponding to the first packet forwarding path, and all links in the first packet forwarding path correspond to a same slice identifier.

The link identifier of the first link identifies the first link. In an example, the link identifier of the first link may be an identifier of the first network node. The identifier of the first network node mentioned herein may be an identifier of a physical interface that is included in the first network node and that is associated with the slice identifier. The identifier of the physical interface may be an IP address of the physical interface, or may be a router identifier (router ID) of the physical interface.

The slice interface identifier corresponding to the first link may be an identifier of an interface used by the first network node to forward a packet including the slice identifier. The slice interface identifier mentioned herein may be an identifier of a physical sub-interface of the first network node, an identifier of a channelized sub-interface of the first network node, or an identifier of a FlexE interface of the first network node.

In an example, the slice configuration information of each link may further include a QoS requirement. QoS requirements of all the links are the same, and the QoS requirement mentioned herein includes but is not limited to a delay requirement, a bandwidth requirement, and the like. In this embodiment of this application, all the links correspond to a same QoS requirement.

Descriptions are provided with reference to FIG. 2.

It is assumed that the first packet forwarding path is: PE1→P1→P2→PE2. In this case, the first packet forwarding path includes three links: a link PE1→P1, a link P1→P2, and a link P2→PE2. In this case, the controller may obtain slice configuration information of the link PE1→P1, slice configuration information of the link P1→P2, and slice configuration information of the link P2→PE2.

The slice configuration information of the link PE1→P1 includes a slice identifier 1, a router ID of the PE1, and an identifier of a slice interface that is on the PE1 and that is associated with the slice identifier 1.

The slice configuration information of the link P1→P2 includes the slice identifier 1, a router ID of the P1, and an identifier of a slice interface that is on the P1 and that is associated with the slice identifier 1.

The slice configuration information of the link P2→PE2 includes the slice identifier 1, a router ID of the P2, and an identifier of a slice interface that is on the P2 and that is associated with the slice identifier 1.

S102: The controller sends a route control message including the slice configuration information of each link to a network node in the first packet forwarding path.

After obtaining the slice configuration information of each link, the controller may send the route control message including the slice configuration information of each link to the network node in the first packet forwarding path. The controller may send the route control message to the network node in the first packet forwarding path through an RR, or may directly send the route control message to the network node in the first packet forwarding path. This is not specifically limited in this embodiment of this application.

As described above, all the links correspond to a same slice identifier. Therefore, in an example, when the slice configuration information of each link is carried via the route control message, the slice identifier may be carried in a slice identifier field. In other words, slice identifiers of all the links share one slice identifier field. In this manner, a message length of the route control message can be reduced, and repeated carrying of same content in the route control message can also be avoided.

Certainly, in still another example, the route control message may alternatively include a plurality of slice identifier fields, and each link corresponds to one slice identifier field to carry a slice identifier corresponding to the link. This is not specifically limited in this embodiment of this application. For example, when the first packet forwarding path corresponds to the path PE1→P1→P2→PE2 shown in FIG. 2, the route control message may include three slice identification fields, which are respectively a slice identifier field corresponding to the link PE1→P1, a slice identifier field corresponding to the link P1→P2, and a slice identifier field corresponding to the link P2→PE2.

As described above, the slice configuration information corresponding to each link may further include the QoS requirement, and all the links correspond to a same QoS requirement. Therefore, in an example, when the slice configuration information of each link is carried via the route control message, the QoS requirement may be carried in a slice attribute field. In other words, the QoS requirements of all the links share one slice attribute field. In this manner, a message length of the route control message can be reduced, and repeated carrying of same content in the route control message can also be avoided.

Certainly, in still another example, the route control message may alternatively include a plurality of slice attribute fields, and each link corresponds to one slice attribute field to carry a QoS requirement corresponding to the link. This is not specifically limited in this embodiment of this application. For example, when the first packet forwarding path corresponds to the path PE1→P1→P2→PE2 shown in FIG. 2, the route control message may include three slice attribute fields, which are respectively a slice attribute field corresponding to the link PE1→P1, a slice attribute field corresponding to the link P1→P2, and a slice attribute field corresponding to the link P2→PE2.

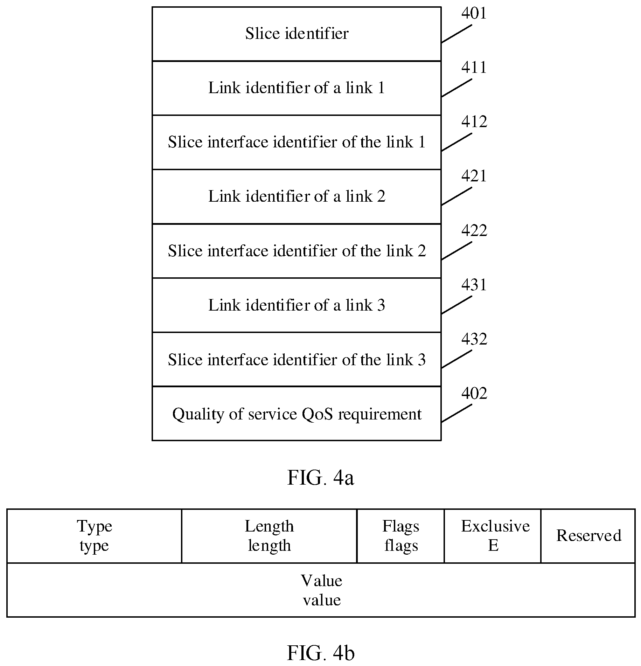

For a structure of the route control message, refer to FIG. 4a for understanding. In FIG. 4a, an example in which the first packet forwarding path includes three links is used for description.

As shown in FIG. 4a, the route control message may include a slice identifier 401 carried in the slice identifier field, a link identifier 411 of a link 1, a slice interface identifier 412 of the link 1, a link identifier 421 of a link 2, a slice interface identifier 422 of the link 2, a link identifier 431 of a link 3, a slice interface identifier 432 of the link 3, and a QoS requirement 402 carried in the slice attribute field.

FIG. 4a is shown only for ease of understanding of this solution, and does not constitute a limitation on this embodiment of this application. In addition to the content shown in FIG. 4a, the route control message may further include another field, which is not described in detail herein.

In an example, when the QoS requirement includes the bandwidth requirement, the bandwidth requirement may be carried in a bandwidth TLV field in the route control message. In an example, the bandwidth TLV may include a type field, a length field, and a value field.

In still another example, in addition to the type field, the length field, and the value field, the bandwidth TLV may further include another field. For example, refer to FIG. 4b for understanding. FIG. 4b is a diagram of a structure of the bandwidth TLV according to an embodiment of this application. As shown in FIG. 4b, in addition to the type field, the length field, and the value field, the bandwidth TLV may further include a flags (flags) field, a reserved field, and an exclusive (exclusive, E) flag.

If the E flag is valid, it indicates that a bandwidth cannot be reused. In other words, the slice interface exclusively occupies a bandwidth resource. If the E flag is invalid, it indicates that a bandwidth can be reused.

In an example, when the E flag is invalid, the bandwidth TLV may further include a sub (sub)-TLV, and the sub-TLV may be, for example, used to carry a peak bandwidth of the slice interface.

The route control message is not specifically limited in this embodiment of this application. In an example, the route control message may be a BGP message, a PCEP message, or an OpenFlow message. Regardless of whether the route control message is the BGP message, the PCEP message, or the OpenFlow message, efficiency of delivering the slice configuration information to the network node by the controller via the message is far higher than efficiency of delivering the slice configuration information to the network node via a netconf.

In an example, when the route control message is the BGP message, the BGP message may be extended, for example, a new extended community attribute is extended, and the slice configuration information of each link is carried in the extended community attribute that is extended. In an example, the structure shown in FIG. 4a may be a structure of the extended community attribute that is extended. In still another example, content carried in the extended community attribute that is extended may be the same as content carried in the structure shown in FIG. 4a.

In an example, when the route control message is the PCEP message or the OpenFlow message, the PCEP message or the OpenFlow message may be extended, for example, a new field is extended, and the slice configuration information of each link is carried in the extended field. In an example, the structure shown in FIG. 4a may be a structure of the extended field. In still another example, content carried in the extended field may be the same as content carried in the structure shown in FIG. 4a.

S103: The first network node receives the route control message, where the first network node is a network node in the first packet forwarding path.

S104: The first network node obtains the slice configuration information of the first link based on the route control message.

After the controller sends the route control message to the network node in the first packet forwarding path, the first network node, as a node in the first packet forwarding path, may receive the route control message. Further, the first network node may parse the route control message to obtain the slice configuration information of the first link.

For the first network node, it should be noted that the first network node may be a head node or an intermediate node in the first packet forwarding path. An example in which the first packet forwarding path is PE1→P1→P2→PE2 is used. The first network node may be the PE1, the P1, or the P2.

In an example, the first network node may extract the first slice configuration information from the route control message by using an identifier of the first link as an index. For example, when the structure of the route control message is shown in FIG. 4a, after obtaining the identifier of the first network node by searching for the route control message, the first network node may extract content of a field following the identifier of the first network node, to obtain the slice interface identifier corresponding to the first link. In addition, when the route control message includes a field shared by all the links, the first network node may further extract information in the field shared by all the links in the route control message, for example, extract the slice identifier and the QoS requirement in the route control message.

S105: The first network node stores the slice configuration information of the first link.

After obtaining the slice configuration information of the first link, the first network node may store the slice configuration information of the first link. In this way, when receiving a service packet including the slice identifier, the first network node may forward the service packet based on the slice configuration information.

It can be learned from the foregoing descriptions that, according to this solution, the controller may send the slice configuration information to the first network node via the route control message. Compared with delivering the slice configuration information via the netconf, delivering the slice configuration information via the route control message has higher delivery efficiency. Therefore, efficiency of receiving the slice configuration information of the first link by the first network node is improved, and correspondingly, efficiency of forwarding a service by the first network node based on the slice configuration information of the first link is improved. Especially in a protection path switching scenario, according to this solution, a first network node can switch a service to a backup path for forwarding as soon as possible, thereby reducing service interruption.

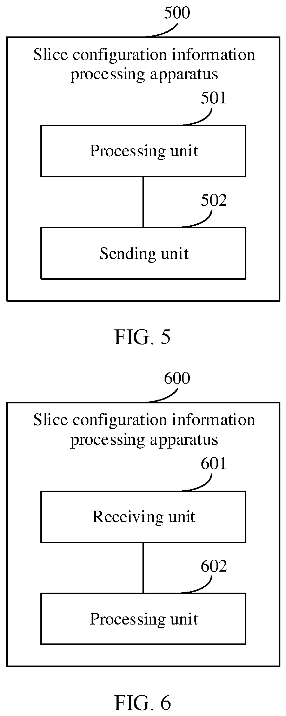

An embodiment of this application further provides a slice configuration information processing apparatus. FIG. 5 is a diagram of a structure of a slice configuration information processing apparatus according to an embodiment of this application. A slice configuration information processing apparatus 500 shown in FIG. 5 may be used in a controller, and is configured to perform the slice configuration information processing method performed by the controller provided in the foregoing method embodiment. In an example, the apparatus 500 may include, for example, a processing unit 501 and a sending unit 502.

The processing unit 501 is configured to determine slice configuration information of each link in at least one link included in a first packet forwarding path.

The sending unit 502 is configured to send a route control message including the slice configuration information of each link to a network node in the first packet forwarding path.

In a possible implementation, the at least one link includes a first link, and slice configuration information of the first link includes: a slice identifier corresponding to the first link, a link identifier of the first link, and a slice interface identifier corresponding to the first link. The first link is a link from a first network node to a second network node.

In a possible implementation, all links correspond to a same slice identifier, the route control message includes a slice identifier field, and the slice identifier field is used to carry the slice identifier.

In a possible implementation, the slice configuration information further includes a quality of service QoS requirement.

In a possible implementation, all the links correspond to a same QoS requirement, the route control message includes a slice attribute field, and the slice attribute field is used to carry the QoS requirement.

In a possible implementation, the QoS requirement includes a bandwidth requirement, and the bandwidth requirement is carried in a bandwidth requirement type-length-value TLV field in the route control message.

In a possible implementation, the link identifier of the first link includes an identifier of the first network node.

In a possible implementation, the route control message is a border gateway protocol BGP message.

In a possible implementation, the BGP message includes an extended community attribute, and the extended community attribute is used to carry the slice configuration information of each link.

In a possible implementation, the route control message is a path computation element communication protocol PCEP message or an OpenFlow message.

An embodiment of this application further provides a slice configuration information processing apparatus. FIG. 6 is a diagram of a structure of still another slice configuration information processing apparatus according to an embodiment of this application. A slice configuration information processing apparatus 600 shown in FIG. 6 may be used in a first network node, and is configured to perform the slice configuration information processing method performed by the first network node provided in the foregoing method embodiment. In an example, the apparatus 600 may include, for example, a receiving unit 601 and a processing unit 602.

The receiving unit 601 is configured to receive a route control message sent by a controller, where the route control message includes slice configuration information of each link in at least one link in a first packet forwarding path, the at least one link includes a first link, and the first link is a link from the first network node to a second network node.

The processing unit 602 is configured to: obtain slice configuration information of the first link based on the route control message, and store the slice configuration information of the first link.

In a possible implementation, the slice configuration information of the first link includes a slice identifier corresponding to the first link, a link identifier of the first link, and a slice interface identifier corresponding to the first link.

In a possible implementation, obtaining slice configuration information of the first link based on the route control message includes: extracting the first slice configuration information from the route control message by using an identifier of the first link as an index.

In a possible implementation, all links correspond to a same slice identifier, the route control message includes a slice identifier field, and the slice identifier field is used to carry the slice identifier.

In a possible implementation, the slice configuration information further includes a quality of service QoS requirement.

In a possible implementation, all the links correspond to a same QoS requirement, the route control message includes a slice attribute field, and the slice attribute field is used to carry the QoS requirement.

In a possible implementation, the QoS requirement includes a bandwidth requirement, and the bandwidth requirement is carried in a bandwidth requirement type-length-value TLV field in the route control message.

In a possible implementation, the link identifier of the first link includes an identifier of the first network node.

In a possible implementation, the route control message is a border gateway protocol BGP message.

In a possible implementation, the BGP message includes an extended community attribute, and the extended community attribute is used to carry the slice configuration information of each link.

In a possible implementation, the route control message is a path computation element communication protocol PCEP message or an OpenFlow message.

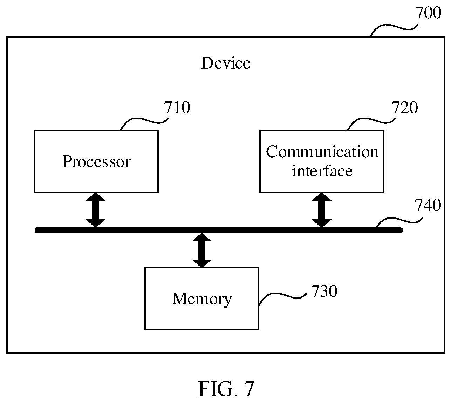

It should be noted that hardware structures of the apparatus 500 and the apparatus 600 mentioned above may be structures shown in FIG. 7. FIG. 7 is a diagram of a structure of a device according to an embodiment of this application.

Refer to FIG. 7. A device 700 includes a processor 710, a communication interface 720, and a memory 730. The device 700 may include one or more processors 710. In FIG. 7, one processor is used as an example. In this embodiment of this application, the processor 710, the communication interface 720, and the memory 730 may be connected through a bus system or in another manner. In FIG. 7, an example in which the processor 710, the communication interface 720, and the memory 730 are connected through a bus system 740 is used.

The processor 710 may be a central processing unit (central processing unit, CPU), a network processor (network processor, NP), or a combination of a CPU and an NP. The processor 710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 730 may include a volatile memory (English: volatile memory), for example, a random access memory (random access memory, RAM). Alternatively, the memory 730 may include a non-volatile memory (English: non-volatile memory), for example, a flash memory (English: flash memory), a hard disk drive (hard disk drive, HDD), or a solid-state drive (solid-state drive, SSD). The memory 730 may further include a combination of the foregoing types of memories. When the device 700 corresponds to the foregoing apparatus 500, the memory 730 may store, for example, slice configuration information of each link in at least one link included in a first packet forwarding path. When the device 700 corresponds to the foregoing apparatus 600, the memory 730 may store, for example, slice configuration information of a first link.

Optionally, the memory 730 stores an operating system and a program, an executable module or a data structure, or a subset thereof, or an extended set thereof. The program may include various operation instructions to implement various operations. The operating system may include various system programs to implement various basic services and process a hardware-based task. The processor 710 may read the program in the memory 730, to implement the slice configuration information processing method provided in embodiments of this application.

The bus system 740 may be a peripheral component interconnect (peripheral component interconnect, PCI) bus, an extended industry standard architecture (extended industry standard architecture, EISA) bus, or the like. The bus system 740 may be classified into an address bus, a data bus, a control bus, and the like. For ease of representation, only one bold line is used for representation in FIG. 7, but this does not mean that there is only one bus or only one type of bus.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a special-purpose computer.

The objectives, technical solutions, and beneficial effects of the present invention are further described in detail in the foregoing specific implementations. It should be understood that the foregoing is merely specific implementations of the present invention.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A slice configuration information processing method, applied to a controller, wherein the method comprises:
determining slice configuration information of each link in at least one link comprised in a first packet forwarding path; and
sending a route control message comprising the slice configuration information of each link to a network node in the first packet forwarding path.

2. The method according to claim 1, wherein the at least one link comprises a first link, and slice configuration information of the first link comprises:
a slice identifier corresponding to the first link, a link identifier of the first link, and a slice interface identifier corresponding to the first link, wherein the first link is a link from a first network node to a second network node.

3. The method according to claim 2, wherein all links correspond to a same slice identifier, the route control message comprises a slice identifier field, and the slice identifier field is used to carry the slice identifier.

4. The method according to any one of claims 1 to 3, wherein the slice configuration information further comprises:
a quality of service QoS requirement.

5. The method according to claim 4, wherein all the links correspond to a same QoS requirement, the route control message comprises a slice attribute field, and the slice attribute field is used to carry the QoS requirement.

6. The method according to claim 5, wherein the QoS requirement comprises a bandwidth requirement, and the bandwidth requirement is carried in a bandwidth requirement type-length-value TLV field in the route control message.

7. The method according to claim 2 or 3, wherein the link identifier of the first link comprises:
an identifier of the first network node.

8. The method according to any one of claims 1 to 7, wherein the route control message is a border gateway protocol BGP message.

9. The method according to claim 8, wherein the BGP message comprises an extended community attribute, and the extended community attribute is used to carry the slice configuration information of each link.

10. The method according to any one of claims 1 to 7, wherein the route control message is:
a path computation element communication protocol PCEP message or an OpenFlow message.

11. A slice configuration information processing method, applied to a first network node, wherein the method comprises:
receiving a route control message sent by a controller, wherein the route control message comprises slice configuration information of each link in at least one link in a first packet forwarding path, the at least one link comprises a first link, and the first link is a link from the first network node to a second network node;
obtaining slice configuration information of the first link based on the route control message; and
storing the slice configuration information of the first link.

12. The method according to claim 11, wherein the slice configuration information of the first link comprises a slice identifier corresponding to the first link, a link identifier of the first link, and a slice interface identifier corresponding to the first link.

13. The method according to claim 12, wherein the obtaining slice configuration information of the first link based on the route control message comprises:
extracting the first slice configuration information from the route control message by using an identifier of the first link as an index.

14. The method according to claim 12, wherein all links correspond to a same slice identifier, the route control message comprises a slice identifier field, and the slice identifier field is used to carry the slice identifier.

15. The method according to any one of claims 11 to 14, wherein the slice configuration information further comprises:
a quality of service QoS requirement.

16. The method according to claim 15, wherein all the links correspond to a same QoS requirement, the route control message comprises a slice attribute field, and the slice attribute field is used to carry the QoS requirement.

17. The method according to claim 16, wherein the QoS requirement comprises a bandwidth requirement, and the bandwidth requirement is carried in a bandwidth requirement type-length-value TLV field in the route control message.

18. The method according to any one of claims 12 to 14, wherein the link identifier of the first link comprises:
an identifier of the first network node.

19. The method according to any one of claims 11 to 18, wherein the route control message is a border gateway protocol BGP message.

20. The method according to claim 19, wherein the BGP message comprises an extended community attribute, and the extended community attribute is used to carry the slice configuration information of each link.

21. The method according to any one of claims 11 to 18, wherein the route control message is:
a path computation element communication protocol PCEP message or an OpenFlow message.

22. A slice configuration information processing apparatus, used in a controller, wherein the apparatus comprises:
a processing unit, configured to determine slice configuration information of each link in at least one link comprised in a first packet forwarding path; and
a sending unit, configured to send a route control message comprising the slice configuration information of each link to a network node in the first packet forwarding path.

23. A slice configuration information processing apparatus, used in a first network node, wherein the apparatus comprises:
a receiving unit, configured to receive a route control message sent by a controller, wherein the route control message comprises slice configuration information of each link in at least one link in a first packet forwarding path, the at least one link comprises a first link, and the first link is a link from the first network node to a second network node; and
a processing unit, configured to: obtain slice configuration information of the first link based on the route control message, and store the slice configuration information of the first link.

24. A device, comprising a processor and a memory, wherein
the memory is configured to store instructions or a computer program; and
the processor is configured to execute the instructions or the computer program, to perform the method according to any one of claims 1 to 21.

25. A computer-readable storage medium, comprising instructions or a computer program, wherein when the instructions or the computer program is run on a computer, the computer is enabled to perform the method according to any one of claims 1 to 21.

26. A computer program product, comprising a computer program, wherein when the computer program is run on a processor, the method according to any one of claims 1 to 21 is performed.
